# EUROPEAN PATENT APPLICATION

(11) **EP 3 508 430 A1**
(43) Date of publication of application: **10.07.2019**
(21) Application number: 19156010.1
(22) Date of filing: 07.03.2016
(51) Int. Cl.: B64F 5/10, B64F 5/60

(54) **SIMULATION OF LOADS ON AEROSTRUCTURES DURING AIRCRAFT ASSEMBLY**

(30) Priority: 23.03.2015 US 201562136663 P
(62) Divisional of application: 16711895.9
(71) Applicant: Bombardier Inc., Dorval, QC H4S 1Y9 (CA); Short Brothers Plc, Belfast BT3 9DZ (GB)
(72) Inventor: LECLERC, Jean-Marc, St- Mathieu, Québec J0L 2H0 (CA)
(74) Representative: HGF Limited

(57) **Abstract**

Methods and systems useful during assembly of aircraft are disclosed. One such method comprises loading a fuselage of the aircraft that is unassembled with a wing of the aircraft to obtain a configuration of the fuselage corresponding to when the fuselage is assembled with the wing. The method also comprises calibrating a device of a navigation system of the aircraft when the fuselage is unassembled with the wing and is being loaded to obtain the loaded configuration and, after calibrating the device of the navigation system, assembling the fuselage with the wing.

## Description

### CROSS-REFERENCE TO RELATED APPLICATION(S)

The present application claims priority to U.S. Provisional Patent Application No. 62/136,663 filed on March 23, 2015, the entire contents of which are hereby incorporated by reference.

### TECHNICAL FIELD

The disclosure relates generally to aircraft assembly, and more particularly to methods and systems for simulating loads on aerostructures to permit calibration of devices during aircraft assembly.

### BACKGROUND OF THE ART

During assembly and commissioning of aircraft, some tasks must be completed during later stages of assembly when the aircraft is completely, or nearly completely, assembled. Such tasks can include the calibration of some devices that are part of the navigation system. The calibration of such devices is typically carried out as a separate task in a later stage of the assembly process and sometimes in a dedicated station in the assembly line. Accordingly, the calibration of such devices can add to the overall time required to assemble and commission the aircraft and also requires holding a nearly complete aircraft (i.e., relatively expensive inventory) during the calibration procedure.

Improvement is therefore desirable.

### SUMMARY

In one aspect, the disclosure describes a method for use during assembly of an aircraft. The method comprises:
loading a fuselage of the aircraft that is unassembled with a wing of the aircraft to obtain a configuration of the fuselage corresponding to when the fuselage is assembled with the wing;
calibrating a device of a navigation system of the aircraft when the fuselage is unassembled with the wing and is being loaded to obtain the configuration; and
after calibrating the device of the navigation system, assembling the fuselage with the wing.

The device of the navigation system may comprise an inertial reference unit or an angle-of-attack indicating system.

Loading the fuselage may comprise simulating a weight of an aircraft engine. Loading the fuselage may comprise simulating a weight of interior furnishings. Loading the fuselage may comprise simulating a weight of the wing. Loading the fuselage may comprise simulating a weight of aircraft fuel.

The configuration obtained during loading of the fuselage may correspond to when the aircraft is completely assembled.

The method may comprise sensing a position of the fuselage during the loading of the fuselage.

The method may comprise automatically adjusting the loading of the fuselage based on the sensed position of the fuselage to maintain the configuration.

The method may comprise carrying out another assembly-related task while calibrating the device of the navigation system.

The method may comprise carrying out a cabin pressurization test before assembling the fuselage with the wing.

In another aspect, the disclosure describes a method for calibrating a device associated with an aerostructure of an aircraft when the aerostructure is unassembled with another component of the aircraft. The method may comprise:
loading the aerostructure that is unassembled with the other component of the aircraft to obtain a configuration of the aerostructure corresponding to when the aerostructure is assembled with the other component of the aircraft; and
calibrating the device when the aerostructure is unassembled with the other aircraft component and being loaded to obtain the configuration.

The aerostructure may comprise a fuselage of the aircraft. The other component may comprise a wing of the aircraft.

Loading the aerostructure may comprise simulating a weight of interior furnishings of the aircraft. Loading the aerostructure may comprise simulating a weight of an aircraft engine. Loading the aerostructure may comprise simulating a weight of aircraft fuel.

The configuration obtained during loading of the aerostructure may correspond to when the aircraft is completely assembled and on the ground.

The device may be part of a navigation system of the aircraft. The device may comprise an inertial reference unit. The device may comprise an angle-of-attack indicating system. The device may comprise a pitot-static system.

The aerostructure may comprise a wing of the aircraft and the other component may comprise a fuselage of the aircraft.

The device may comprise a flight control surface, a landing gear or a landing gear door.

The method may comprise sensing a position of the aerostructure during the loading of the aerostructure and adjusting the loading of the aerostructure based on the sensed position of the aerostructure.

The method may comprise simultaneously carrying out another assembly-related task while calibrating the device.

In another aspect, the disclosure describes a method for loading a fuselage of an aircraft that is unassembled with another component of the aircraft to obtain a configuration of the fuselage corresponding to when the fuselage is assembled with the other component. The method comprises:
loading the fuselage of the aircraft that is unassembled with the other component to simulate a weight of the other component and obtain a configuration of the fuselage corresponding to when the fuselage is assembled with the other component;
sensing a position of the fuselage during the loading of the fuselage; and
adjusting the loading of the fuselage based on the sensed position of the fuselage to maintain the configuration.

Loading the fuselage may comprise simulating a weight of an aircraft engine assembled with the fuselage. Loading the fuselage may comprise simulating a weight of interior furnishings. Loading the fuselage may comprise simulating a weight of one or more wings assembled with the fuselage. Loading the fuselage may comprise simulating a weight of aircraft fuel.

The configuration obtained during loading of the fuselage may correspond to when the aircraft is completely assembled.

The method may comprise comparing the sensed position with a desired position, and based on a difference between the sensed position and the desired position, adjusting the loading of the fuselage to keep or bring the sensed position within a desired tolerance of the desired position.

The method may comprise detecting a disturbance affecting the configuration of the fuselage based on the sensed position, and adjusting the loading of the fuselage to compensate for the disturbance and maintain the configuration.

The method may comprise carrying out a cabin pressurization test during the loading of the fuselage.

In another aspect, the disclosure describes a system for loading a fuselage of an aircraft during calibration of a device of a navigation system of the aircraft to replicate a configuration of the fuselage corresponding to when the fuselage is assembled with another component of the aircraft. The system comprises:
an actuator for loading the fuselage unassembled with the other component;
a sensor for sensing a position of the fuselage;
a data processor configured to receive an input signal representative of the position sensed by the sensor and generate an output signal for controlling the actuator; and
machine-readable memory coupled to the data processor, the machine-readable memory comprising: data representative of a stored position of the fuselage associated with a configuration corresponding to when the fuselage is assembled with the other component of the aircraft; and machine-readable instructions configured to cause the processor to:
   using the input signal and the data representative of the stored position, compare the sensed position with the stored position; and
   based on a difference between the sensed position and the stored position, generate the output signal for causing the actuator to load the fuselage to keep or bring the sensed position within a desired tolerance of the stored position.

The sensor may comprise a laser position tracking system and/or a photogrammetry system.

The other component may comprise a wing of the aircraft and the configuration with which the stored position is associated may correspond to when the fuselage is assembled with the wing.

The other component may comprise interior furnishings and the configuration with which the stored position is associated may correspond to when the fuselage is assembled with the interior furnishings.

The other component may comprise an aircraft engine and the configuration with which the stored position is associated may correspond to when the fuselage is assembled with the aircraft engine.

The other component may comprise aircraft fuel and the configuration with which the stored position is associated may correspond to when the aircraft contains aircraft fuel.

The configuration with which the stored position is associated may correspond to when the aircraft is completely assembled.

The system may comprise a weight for at least partially simulating the other component being assembled with the fuselage.

The position sensor may be configured to sense a plurality of positions associated with different respective portions of the fuselage. The machine-readable memory may comprise data representative of stored positions corresponding to the different respective portions of the fuselage.

The system may comprise a plurality of actuators for loading the same or different respective portions of the fuselage.

The machine-readable instructions may be configured to cause the processor to detect a disturbance affecting the configuration of the fuselage based on the sensed position and generate the output signal to compensate for the disturbance.

In a further aspect, the disclosure describes an assembly line comprising a plurality of stations for assembling an aircraft, wherein one of the stations comprises a system as described herein.

Further details of these and other aspects of the subject matter of this application will be apparent from the detailed description and drawings included below.

### DESCRIPTION OF THE DRAWINGS

Reference is now made to the accompanying drawings, in which:
FIG. 1 is a top plan view of an exemplary aircraft with which the systems and methods disclosed herein may be used;
FIG. 2 shows a schematic representation of an exemplary system for loading a fuselage of the aircraft of FIG. 1 to simulate loads associated with the fuselage when the fuselage is assembled with one or more other components;
FIGS. 3A and 3B show a schematic representation of another exemplary system for loading the fuselage of the aircraft of FIG. 1 to simulate loads associated with the fuselage when the fuselage is assembled with one or more other components;
FIG. 4A is a side elevation view of the aircraft of FIG. 1 when completely assembled showing a deflection line representing a deflection state of the fuselage;
FIG. 4B is a side elevation view of the fuselage of the aircraft of FIG. 4A when unassembled with wings and engines, showing exemplary forces for application to the fuselage to replicate the deflection state of FIG. 4A;
FIG. 5 shows a schematic representation of the system of FIG. 2 for loading a wing of the aircraft of FIG. 1 to simulate loads associated with the wing when the wing is assembled with one or more other components;
FIG. 6A is a front elevation view of the aircraft of FIG. 1 when completely assembled, showing a deflection line representing a deflection state of the wings when the aircraft is on the ground;
FIG. 6B is a front elevation view of the aircraft of FIG. 1 when completely assembled, showing a deflection line representing a deflection state of the wings when the aircraft is in flight;
FIG. 7 is a flowchart illustrating a method for loading the fuselage of the aircraft of FIG. 1 that is unassembled with another component of the aircraft to obtain a configuration of the fuselage corresponding to when the fuselage is assembled with the other component;
FIG. 8 is a flowchart illustrating a method for calibrating a device associated with an aerostructure of the aircraft of FIG. 1 when the aerostructure is unassembled with another component of the aircraft;
FIG. 9 shows a schematic representation of three stations of an exemplary aircraft assembly line comprising the system of FIGS. 2, 3A, 3B and/or 5; and
FIG. 10 is a flowchart illustrating a method useful during assembly of the aircraft of FIG. 1.

### DETAILED DESCRIPTION

Various aspects of the present disclosure may be useful for reducing the time and cost associated with assembling and commissioning aircraft. In various embodiments, the systems and methods disclosed herein may be used for calibrating aircraft devices that typically must be calibrated after complete or nearly-complete assembly of an aircraft, at an earlier stage during the assembly process. In some embodiments, the systems and methods disclosed herein may be used for calibrating a device associated with an aerostructure that is not yet assembled to another aerostructure or to the remainder of the aircraft. Accordingly, the calibration of the device may be carried out on an aerostructure that has a lower inventory cost and that also has a smaller physical size than an entire aircraft. In some embodiments, the systems and methods disclosed herein may be used for calibrating such devices while other assembly-related tasks are being carried out simultaneously so as to reduce the overall time required to assemble the aircraft.

Aspects of various embodiments are described below through reference to the drawings.

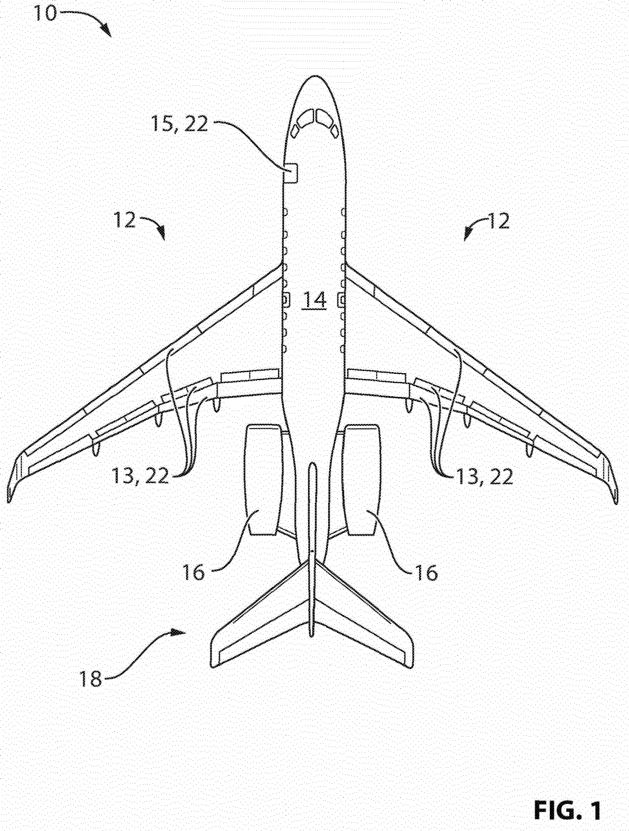

FIG. 1 is a top plan view of an exemplary aircraft 10 with which the systems and methods disclosed herein may be used. Aircraft 10 may be any type of aircraft such as corporate, private, commercial and passenger aircraft suitable for civil aviation. For example, aircraft 10 may be a narrow-body, twin-engine jet airliner. Aircraft 10 may be a fixed-wing aircraft or a rotary-wing aircraft. Aircraft 10 may comprise one or more wings 12 including one or more flight control surfaces 13, fuselage 14 including one or more doors 15, one or more engines 16 and empennage 18. One or more of engines 16 may be mounted to fuselage 14. Alternatively, or in addition, one or more of engines 16 may be mounted to wings 12.

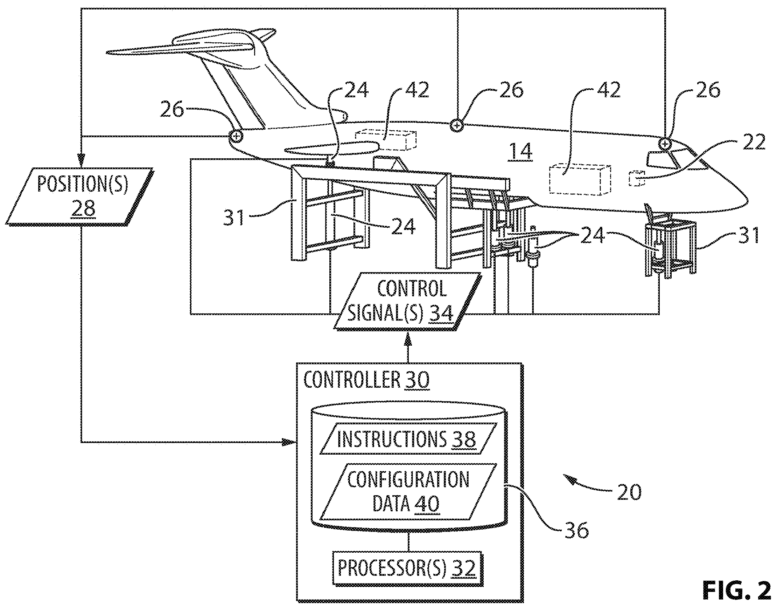

FIG. 2 shows a perspective view of fuselage 14 of aircraft 10 of FIG. 1 together with a schematic representation of an exemplary system 20 for loading fuselage 14 to simulate fuselage 14 being assembled with one or more other components. Even though the exemplary system 20 is shown in conjunction with fuselage 14, it is understood that system 20 and the methods disclosed herein could also be used with one or more other types of aerostructures (e.g., wings) to simulate such aerostructure(s) 12, 14 being assembled with one or more other components (e.g., aerostructures, engines, interior furnishings, fuel).

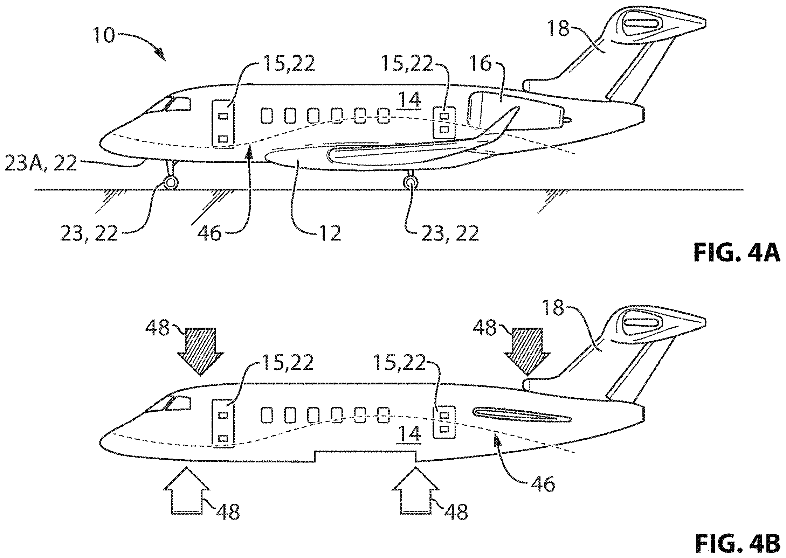

Aircraft 10 may comprise one or more devices 22 (referred hereinafter as "device 22") shown schematically in FIG. 2 that may require calibration before aircraft 10 may be flown. Device 22 may be part of a navigation system of aircraft 10. For example, device 22 may comprise an inertial reference unit and/or an angle-of-attack indicating system. Device 22 may comprise a pitot-static system. In some embodiments where system 20 may be used in conjunction with wing 12 instead of fuselage 14, device 22 may comprise flight control surface 13 (e.g., flap, slat, spoiler, aileron) as shown in FIG. 1. In some situations, device 22 may comprise aircraft door 15, landing gear 23 or landing gear door 23A (see FIG. 4A). Calibration of device 22 may be conducted according to known or other methods.

In any case, device 22 may be of the type that requires calibration (e.g., mechanical rigging/adjustment in the case of flight control surfaces 13, landing gear 23, doors 15, 23A) when the corresponding aerostructure to which device 22 is mounted or with which device 22 is associated is loaded (e.g., in a deflected state) as if the aerostructure was assembled with one or more other components of aircraft 10 or as if the aircraft 10 was in a completely or nearly completely assembled state. Accordingly, in existing aircraft assembly lines using existing assembly procedures, device 22 must typically be calibrated only after the aerostructure 12, 14 to which device 22 is mounted or otherwise associated with is assembled with other components (e.g., aerostructures, engines 16). For example, the weight of engines 16, wings 12, interior furnishings and fuel may cause some deflection of fuselage 14 and/or wings 12 and also result in a specific location of the center of gravity (CG) of aircraft 10. Accordingly, the specific configuration that is adopted by fuselage 14 when aircraft 10 is completely assembled can be an important factor in obtaining a desired calibration of device 22.

System 20 may be used to load fuselage 14 (or other aerostructure) before assembling fuselage 14 with other components to replicate the configuration (e.g., deflection state, position of CG) of fuselage 14 that is expected once fuselage 14 is assembled with one or more components, when aircraft 10 is completely assembled, or, one or more configurations therebetween. For example, by replicating the completely-assembled configuration of fuselage 14 when it is in fact not yet assembled with other components of aircraft 10, the calibration of device 22 may be conducted earlier in the aircraft assembly process and also using only part of aircraft 10 instead of tying up the entire aircraft 10 during the calibration of device 22. For the purpose of the present disclosure it should be understood that the use of terms such as "replicating" and "maintaining" in conjunction with positions or configurations are not intended to represent an absolute condition but instead a condition that is within an acceptable tolerance of a target which is adequate for performing the calibrations or other tasks referenced herein.

In various embodiments, system 20 may be used for loading fuselage 14 (or other aerostructure) of aircraft 10 to replicate a configuration of fuselage 14 corresponding to when fuselage 14 is assembled with one or more other components of aircraft 10 and thereby permit the calibration of device 22 to be carried out at an earlier stage of the assembly process and/or on a less costly piece of inventory. In some embodiments, system 20 may comprise: one or more actuators 24 (referred hereinafter as "actuator 24") for loading different portions of fuselage 14, one or more sensors 26 (referred hereinafter as "position sensor 26") for sensing one or more positions 28 (referred hereinafter as "sensed position 28") associated with fuselage 14, and controller 30 for controlling actuator 24 based on the sensed position 28. Actuator 24 may comprise one or more hydraulic, electric, pneumatic and/or other suitable type of actuator(s) that may be controllable via controller 30. Actuator 24 may be configured to apply a pulling and/or pushing force on part of fuselage 14 depending on the type of loads to be applied to fuselage 14. Actuator 24 may be supported by one or more support frames 31 which may comprise one or more jigs for transferring load(s) from actuator 24 to one or more different portions of fuselage 14. System 20 may also comprise one or more load cells (not shown) that may be part of one or more load strings together with actuators 24 to provide force feedback to controller 30.

Positions sensor 26 may comprise any suitable means for obtaining an actual position of one or more points on or otherwise associated with fuselage 14. In some embodiments, position sensor 26 may comprise a laser position tracking system of known or other types. Alternatively or in addition, position sensor 26 may comprise a photogrammetry system of known or other type. Other types of (contact or contactless) position sensing devices or systems may also be suitable.

Controller 30 may comprise one or more data processors 32 (referred hereinafter as "processor 32") configured to receive an input signal representative of position 28 monitored by sensor 26 and generate an output comprising one or more control signals 34 for controlling actuator 24. Processor 32 may comprise any type of general-purpose microprocessor or microcontroller, a digital signal processing (DSP) processor, an integrated circuit, a field programmable gate array (FPGA), a reconfigurable processor, a programmable read-only memory (PROM), other suitably programmed or programmable logic circuits or any combination thereof.

System 20 may also comprise machine-readable memory 36 coupled to data processor 32. Machine-readable memory 36 may include any type of computer memory that is located either internally or externally to controller 30 such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like.

Various aspects of the present disclosure may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects. Furthermore, aspects of the present disclosure may take the form of a computer program product embodied in memory 36 having computer readable program code (e.g., machine-readable instructions 38) embodied thereon. Any combination of one or more known or other memory 36 may be utilized for storing instructions 38 thereon.

Instructions 38 may comprise computer program code for carrying out operations for aspects of the present disclosure and may be written in any combination of one or more programming languages, including an object oriented programming language such as Java, Smalltalk, C++ or the like and conventional procedural programming languages, such as the "C" programming language or other programming languages. Instructions 38 may be executed entirely or in part by processor 32.

Memory 36 may comprise configuration data 40 stored thereon. Configuration data 40 may comprise one or more stored desired positions associated with one or more respective points on fuselage 14 or otherwise associated with fuselage 14 when fuselage 14 is assembled to one or more other components or when aircraft 10 is completely assembled. For example, the stored positions(s) in configuration data 40 may correspond to a state of deflection of fuselage 14 that corresponds to when, for example, wings 12, engines 16 and/or interior furnishings have been assembled with fuselage 14. For, example, configuration data 40 may be representative of a state of fuselage 14 when aircraft 10 is completely assembled and is on the ground or, alternatively, is in flight. In other words, configuration data 40 may be representative of a deflection state of fuselage 40 that is appropriate for conducting a calibration of device 22. In some embodiments, configuration data 40 may comprise one or more numerical values associated with one or more desired positions of one or more different portions of fuselage 14 in the form of a look-up table. Alternatively or in addition, configuration data 40 may comprise a digital geometric representation of at least part of fuselage 14 in the form of a computer aided design (CAD) model comprising one or more lines/curves, surfaces and/or solids.

Machine-readable instructions 38 may be configured to cause processor 32 to: using sensed position(s) 28 and configuration data 40 representative of desired position(s), compare sensed position(s) 28 with the desired position(s); and based on a difference between sensed position(s) 28 and the desired position(s), generate one or more control signals 34 for causing actuator 24 to load fuselage 24 to keep or bring sensed position(s) 28 within a desired tolerance from the desired position(s) stored in configuration data 40.

In various embodiments, system 20 may continuously or periodically obtain new sensed position(s) 28 (i.e., monitor sensed position(s) 28) and continuously or periodically generate new control signal(s) 34 so as to control the loading on fuselage 14. Accordingly, controller 30, positions sensor 26 and actuator 24 may be coupled together in the form of a feedback control loop. Accordingly, the feedback control loop arrangement of system 20 may be configured to compensate for disturbances that would otherwise cause the position of one or more points associated with fuselage 14 to change and become outside of the desired range suitable for carrying out the calibration of device 22. For example, system 20 may be configured to compensate for assembly personnel simultaneously carrying out other assembly-related tasks while system 20 is maintaining fuselage 14 in the desired configuration and calibration of device 22 is being performed. For example, system 20 may be configured to compensate for assembly personnel carrying out the installation of furnishings inside of fuselage 14 (i.e., adding weight to fuselage 14) and also moving/walking around inside of fuselage 14 (i.e., dynamically changing the weight distribution within fuselage 14) while the desired configuration of fuselage 14 is being maintained and the calibration of device 22 is being performed. Accordingly, system 20 may be configured to monitor sensed positions 28 and dynamically adjust actuator 24 so that the desired configuration of fuselage 14 may be maintained to permit calibration of device 22 without interrupting or significantly adding to the overall time for assembling aircraft 10. Accordingly, the use of system 20 may permit the calibration of device 22 to be performed in parallel with one or more other assembly-related tasks being carried out simultaneously.

System 20 may also comprise one or more weights 42 that may be used to at least partially simulate one or more of the other components (e.g., engine(s) 16, wing(s) 12, interior furnishings, fuel, etc.) that may exert some force on fuselage 14 and that may cause some non-negligible deflection of fuselage 14. Weights 42 may be used in conjunction with actuator 24 to achieve the desired loading on fuselage 14. Alternatively, depending on the number, location and configuration of actuators 24, weights 42 may not necessarily be required and actuator 24 alone may be sufficient to achieve the desired loading on fuselage 14 to achieve the desired configuration.

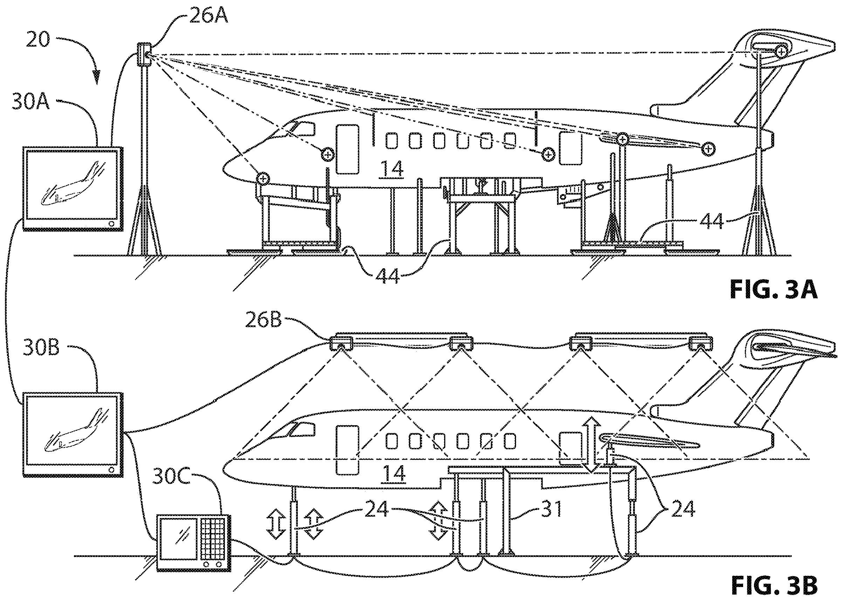

FIGS. 3A and 3B show a schematic representation of another exemplary system 20 for loading fuselage 14 of aircraft 10 to simulate loads associated with fuselage 14 when fuselage 14 is assembled with one or more other components. As described above, position sensor 26 may comprise a laser position tracking system 26A and/or photogrammetry system 26B. Laser position tracking system 26A and photogrammetry 26B may be used simultaneously or separately at different stages. For example, as illustrated in FIG. 3A, laser position tracking system 26A may be used for initial positioning of fuselage 14 prior to applying loads to fuselage 14. For example, system 20 may comprise support structure 44 that may be adjustable and may be used to obtain a baseline/initial position (e.g., level) fuselage 14 before loading fuselage 14. Laser position tracking system 26A may comprise one or more detectable targets located on fuselage 14 and/or on support structure 44. Laser position tracking system 26A may be coupled to controller 30 (shown as separate components 30A, 30B and 30C in FIG. 3) so as to permit controller 30 to compare sensed positions 28 with baseline data that may be stored in memory 36.

Once a desired baseline position of fuselage 14 has been obtained, photogrammetry system 26B may be used in conjunction with actuator 24 to obtain the configuration of fuselage 14 corresponding to when fuselage 14 is assembled with one or more other components as described above. In some embodiments, both laser position tracking system 26A and photogrammetry system 26B may be used while obtaining the desired loaded configuration of fuselage 14 by, for example, acquiring sensed positions 28 associated with different portions of fuselage 14 and/or of the same portions for comparison or other purpose.

Alternatively, only one of laser position tracking system 26A and photogrammetry system 26B may be required for performing the methods disclosed herein and the other may be provided as a back-up in case of failure of one of the systems.

FIG. 4A is a side elevation view of aircraft 10 when completely assembled showing deflection line 46 representing a deflection state of fuselage 14 when aircraft 10 is completely assembled (i.e., completely assembled configuration). FIG. 4B is a side elevation view of fuselage 14 of aircraft 10 when unassembled with wings 12 and engines 16 showing equivalent forces 48 applied to fuselage 14 to obtain the same deflection line 46 as in FIG. 4A. Deflection line 46 shows an exaggerated representation of the deflection state of fuselage 14 for illustration purpose. Forces 48 may be applied using actuator 24 and optionally weights 42 of system 20 as described above. Configuration data 40 may correspond to a deflection state of fuselage 14 represented by deflection line 46.

The use of system 20 may permit the performance of tasks other than those disclosed herein. For example, the loading of fuselage 14 may also permit the performance of a cabin pressurization test before the assembly of fuselage 14 with other components (e.g., wings 12, engines 16).

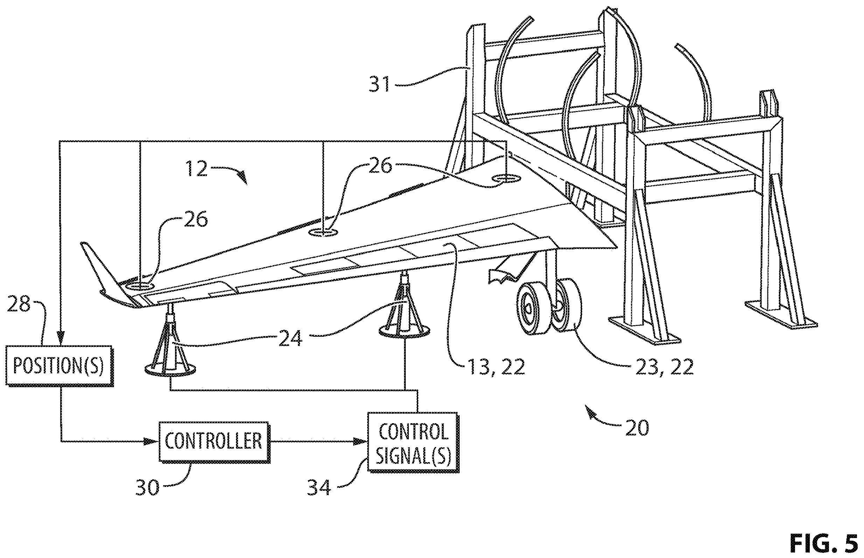

FIG. 5 shows a schematic representation of system 20 for loading wing 12 of the aircraft 10 when wing 12 is not assembled with fuselage 14, to simulate loads associated with wing 12 when wing 12 is assembled with fuselage 14. As explained above, system 20 may be used to load different types of aerostructures such as fuselage 14 and wing 12 for example. In some embodiments, the same support frame 31 may be configured to be used for loading fuselage 14 and/or wing 12 in order to permit calibration of device 22 prior to the complete assembly of aircraft 10.

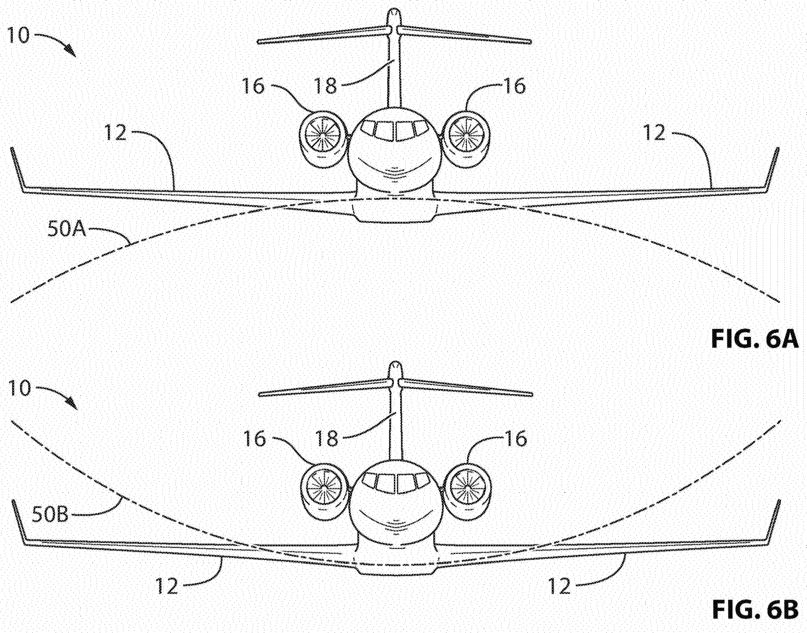

FIG. 6A is a front elevation view of the aircraft 10 when completely assembled showing deflection line 50A representing a deflection state of wings 12 when aircraft 10 is on the ground. FIG. 6B is a front elevation view of aircraft 10 when completely assembled showing deflection line 50B representing a deflection state of wings 12 when aircraft 10 is in flight or simulated flight by having aircraft 10 supported by one or more jacks. Deflection lines 50A and 50B show an exaggerated representation of the deflection state of wings 12 for illustration purpose. Configuration data 40 may correspond to one or more deflection states of wing(s) 12 represented by deflection lines 50A and/or 50B. The loading of one or more wings 12 to obtain the configurations represented by deflection lines 50A, 50B may be performed using system 20. In various embodiments, system 20 may be configured to load an aerostructure to simulate a condition where aircraft 10 is completely or partially assembled. In various embodiments, system 20 may be configured to load an aerostructure to simulate a condition where aircraft 10 is either on the ground or in flight.

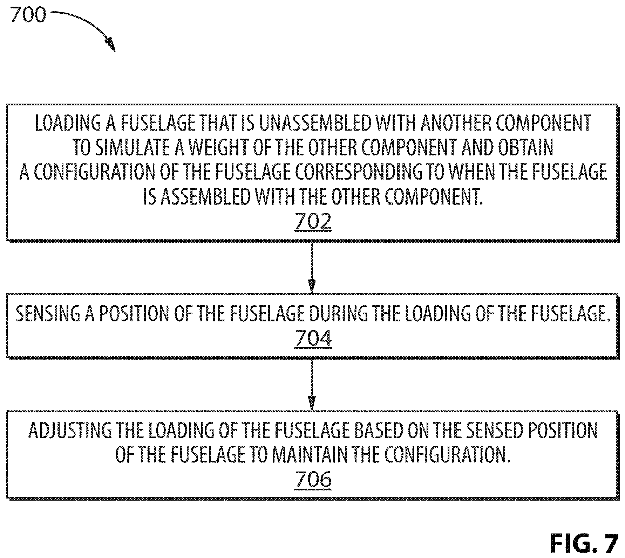

FIG. 7 is a flowchart illustrating a method 700 for loading fuselage 14 of aircraft 10 that is unassembled with another component of aircraft 10 to obtain a configuration of fuselage 14 (e.g., see FIG. 4B) corresponding to when fuselage 14 is assembled with the other component. Method 700 or part(s) thereof may be performed using system 20 in the form described above. Method 700 may comprise: loading fuselage 14 of aircraft 10 that is unassembled with the other component to simulate a weight of the other component and obtain a configuration of fuselage 14 corresponding to when fuselage 14 is assembled with the other component (see block 702); sensing a position 28 of fuselage 14 during the loading of fuselage 14 (see block 704); and adjusting the loading of fuselage 14 based on sensed position 28 of fuselage 14 to maintain the configuration (see block 706). The configuration of fuselage 14 may, for example, correspond to the configuration represented by deflection line 46 shown in FIGS. 4A and 4B.

In some embodiments, loading fuselage 14 may comprise simulating a weight of one or more aircraft engines 16, interior furnishings and/or one or more wings 12 assembled with fuselage 14. In some embodiments, loading fuselage 14 may comprises simulating a weight of aircraft fuel being contained by aircraft 10.

In some embodiments, the configuration obtained during loading of fuselage 14 may correspond to when aircraft 10 is completely or partially assembled.

As explained above in relation to system 20, method 700 may correspondingly comprise comparing sensed position 28 with a desired position which may be stored in memory 36 as part of configuration data 40. Based on a difference between sensed position 28 and the desired position, the loading of fuselage 14 may be adjusted to keep or bring the sensed position 28 within a desired tolerance from the desired position. The desired tolerance may be selected so that the configuration of fuselage 14 may be within a range permitting satisfactory calibration of device 22.

As explained above, system 20 may be configured to continuously or periodically monitor sensed position 28 and control actuator 24 in a feedback control loop in order to compensate for disturbances that could affect the loaded configuration of fuselage 14. Accordingly, disturbances that may be encountered during another assembly-related task may be compensated by system 20 so that the calibration of device 22 may be performed simultaneously while the other assembly-related task is being carried out. Accordingly, method 700 may comprise detecting a disturbance affecting the loaded configuration of fuselage 14 based on sensed position 28 and adjusting the loading of fuselage 14 to compensate for the disturbance and maintain the loaded configuration.

In some embodiments, method 700 may comprise carrying out a cabin pressurization test during the loading of fuselage 14.

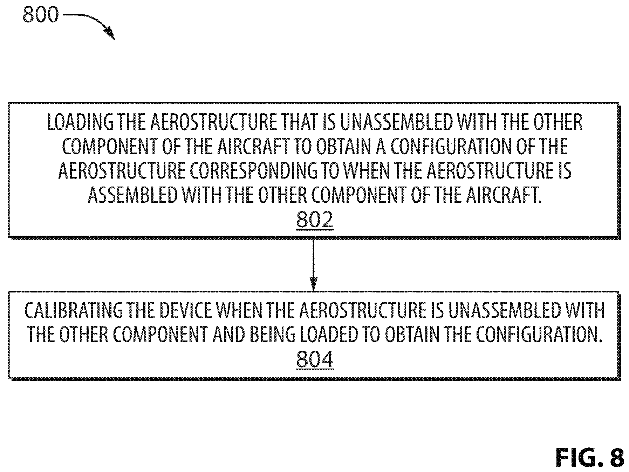

FIG. 8 is a flowchart illustrating a method 800 for calibrating device 22 associated with an aerostructure (e.g., fuselage 14, wing 12) of aircraft 10 when the aerostructure, 12, 14 is unassembled with another component of aircraft 10. Method 800 or part(s) thereof may be performed using system 20 in the form described above. Method 800 may comprise: loading aerostructure 12, 14 that is unassembled with the other component of aircraft 10 to obtain a configuration of aerostructure 12, 14 corresponding to when aerostructure 12, 14 is assembled with the other component of aircraft 10 (see block 802); and calibrating device 22 when aerostructure 12, 14 is unassembled with the other aircraft component and being loaded to obtain the configuration (see block 804).

In some embodiments, the aerostructure may comprise fuselage 14 and the other component may comprises wing 12 of aircraft 10.

In various embodiments, loading the aerostructure may comprise: simulating a weight of interior furnishings; simulating a weight of wing 12; simulating a weight of engine 16; and/or simulating a weight of aircraft fuel.

The configuration obtained during loading of the aerostructure 12, 14 may correspond to when aircraft 10 is completely assembled and on the ground or in flight. Alternatively, the configuration may correspond to when aircraft 10 is partially assembled.

Device 22 may be part of a navigation system of aircraft 10. For example, device 22 may comprises an inertial reference unit or an angle-of-attack indicating system. In some embodiments, device 22 may comprise a pitot-static system.

In some embodiments, the aerostructure may comprise wing 12 and the other component may comprise fuselage 14 of aircraft 10. In such situation, device 22 may comprise flight control surface 13.

In some embodiments, device 22 may comprise landing gear 23 or landing gear door 23A.

Similarly to method 700, method 800 may also comprise sensing a position 28 of aerostructure 12, 14 during the loading of aerostructure 12, 14; and adjusting the loading of aerostructure 12, 14 based on sensed position 28 of aerostructure 12, 14. Method 800 may also comprise simultaneously carrying out another aircraft-assembly task while calibrating device 22.

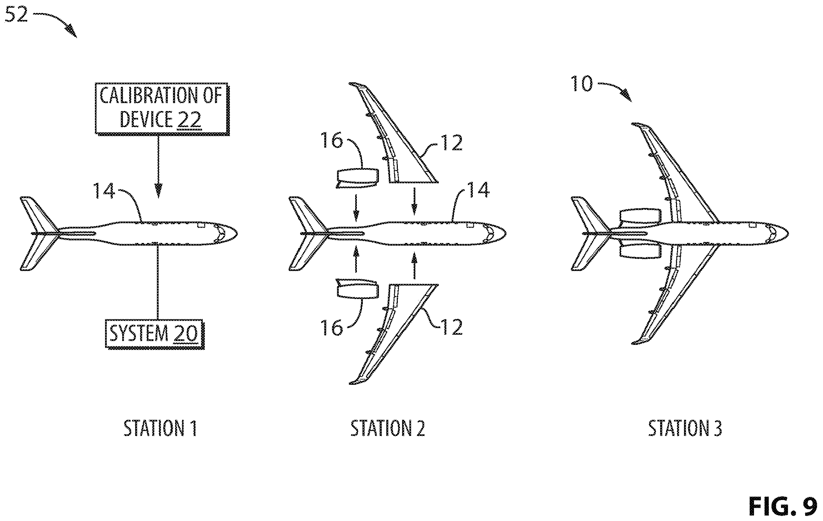

FIG. 9 shows a schematic representation of three stations of an exemplary partial aircraft assembly line 52 comprising system 20 described above. FIG. 9 shows that the use of system 20 may permit the calibration of device 22 to be performed prior to assembling engines 16 and wings 12 to fuselage 14. It is understood that assembly line 52 may comprise additional or fewer stations than those shown in FIG. 9. At Station 1, one or more assembly-related tasks that come prior to assembling engines 16 and wings 12 with fuselage 14 may be carried out. Accordingly, Station 1 may comprise system 20 for loading aerostructure 12, 14 for permitting calibration of device 22 to be performed while other assembly-related tasks may be carried out in Station 1. At Station 2, engines 16 and wings 12 may be assembled with fuselage 14. Wings 12 may be separately assembled with fuselage 14 or may be first assembled together as a unit that is subsequently assembled with fuselage 14. At Station 3, a final inspection and testing of various systems of aircraft 10 may be performed prior to delivering aircraft 10 to the customer.

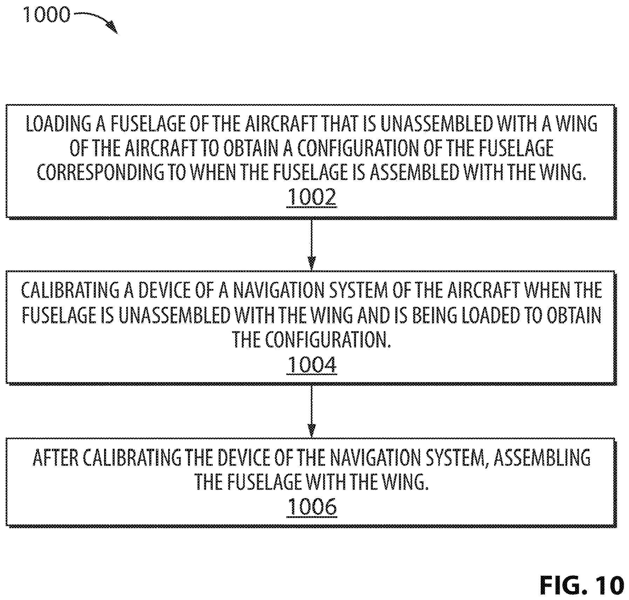

FIG. 10 is a flowchart illustrating a method 1000 useful during assembly of aircraft 10. Method 1000 or part(s) thereof may be performed using system 20 in the form described above. Method 1000 or part(s) thereof may be performed using system 20 which may be part of Station 1 of assembly line 52 shown in FIG. 9. Method 1000 may comprise: loading fuselage 14 of aircraft 10 that is unassembled with wing 12 of aircraft 10 to obtain a configuration of fuselage 14 corresponding to when fuselage 14 is assembled with wing 12 (see block 1002); calibrating device 22 of a navigation system of aircraft 10 when fuselage 14 is unassembled with wing 12 and is being loaded to obtain the configuration (see block 1004); and after calibrating device 22 of the navigation system, assembling fuselage 14 with wing 12 (see block 1006).

In various embodiments, device 22 may comprise an inertial reference unit, an angle-of-attack indicating system or some other device of the navigation system of aircraft 10.

In various embodiments, loading fuselage 14 may comprise: simulating a weight of one or more aircraft engines 16; simulating a weight of interior furnishings; simulating a weight of one or more wings 12; and/or simulating a weight of aircraft fuel.

In some embodiments, the configuration obtained during loading of fuselage 14 may correspond to when aircraft 10 is completely assembled or partially assembled. In some embodiments, the configuration obtained during loading of fuselage 14 may correspond to when aircraft 10 is on the ground or in flight.

Method 1000 may comprise sensing a position 28 of fuselage 14 during the loading of fuselage 14 and automatically adjusting the loading of fuselage 14 based on sensed position 28 of fuselage 14 to maintain the configuration.

In some embodiments, method 1000 may comprise carrying out another assembly-related task while calibrating device 22 of the navigation system.

In some embodiments, method 1000 may comprise carrying out a cabin pressurization test before assembling fuselage 14 with wing 12.

The above description is meant to be exemplary only, and one skilled in the relevant arts will recognize that changes may be made to the embodiments described without departing from the scope of the invention disclosed. For example, the blocks and/or operations in the flowcharts and drawings described herein are for purposes of example only. There may be many variations to these blocks and/or operations without departing from the teachings of the present disclosure. For instance, the blocks may be performed in a differing order, or blocks may be added, deleted, or modified. The present disclosure may be embodied in other specific forms without departing from the subject matter of the claims. Also, one skilled in the relevant arts will appreciate that while the systems and methods disclosed and shown herein may comprise a specific number of elements/steps, the systems and methods could be modified to include additional or fewer of such elements/steps. The present disclosure is also intended to cover and embrace all suitable changes in technology. Modifications which fall within the scope of the present invention will be apparent to those skilled in the art, in light of a review of this disclosure, and such modifications are intended to fall within the appended claims. Also, the scope of the claims should not be limited by the preferred embodiments set forth in the examples, but should be given the broadest interpretation consistent with the description as a whole.
Further Embodiments of the disclosure are defined in the following clauses:
1. A method for use during assembly of an aircraft, the method comprising:
   loading a fuselage of the aircraft that is unassembled with a wing of the aircraft to obtain a configuration of the fuselage corresponding to when the fuselage is assembled with the wing;
   calibrating a device of a navigation system of the aircraft when the fuselage is unassembled with the wing and is being loaded to obtain the configuration; and
   after calibrating the device of the navigation system, assembling the fuselage with the wing.
2. The method as defined in clause 1, wherein the device of the navigation system comprises an inertial reference unit.
3. The method as defined in clause 1, wherein the device of the navigation system comprises an angle-of-attack indicating system.
4. The method as defined in any one of clauses 1 to 3, wherein loading the fuselage comprises simulating a weight of an aircraft engine.
5. The method as defined in any one of clauses 1 to 4, wherein loading the fuselage comprises simulating a weight of interior furnishings.
6. The method as defined in any one of clauses 1 to 5, wherein loading the fuselage comprises simulating a weight of the wing.
7. The method as defined in any one of clauses 1 to 6, wherein loading the fuselage comprises simulating a weight of aircraft fuel.
8. The method as defined in any one of clauses 1 to 7, wherein the configuration obtained during loading of the fuselage corresponds to when the aircraft is completely assembled.
9. The method as defined in any one of clauses 1 to 8, comprising sensing a position of the fuselage during the loading of the fuselage.
10 The method as defined in clause 9, comprising automatically adjusting the loading of the fuselage based on the sensed position of the fuselage to maintain the configuration.
11. The method as defined in any one of clauses 1 to 10, comprising carrying out another assembly-related task while calibrating the device of the navigation system.
12. The method as defined in any one of clauses 1 to 10, comprising carrying out a cabin pressurization test before assembling the fuselage with the wing.
13. A method for calibrating a device associated with an aerostructure of an aircraft when the aerostructure is unassembled with another component of the aircraft, the method comprising:
   loading the aerostructure that is unassembled with the other component of the aircraft to obtain a configuration of the aerostructure corresponding to when the aerostructure is assembled with the other component of the aircraft; and
   calibrating the device when the aerostructure is unassembled with the other aircraft component and being loaded to obtain the configuration.
14. The method as defined in clause 13, wherein the aerostructure comprises a fuselage of the aircraft.
15. The method as defined in clause 14, wherein the other component comprises a wing of the aircraft.
16. The method as defined in any one of clauses 13 to 15, wherein loading the aerostructure comprises simulating a weight of interior furnishings of the aircraft.
17. The method as defined in any one of clauses 13 to 16, wherein loading the aerostructure comprises simulating a weight of an aircraft engine.
18. The method as defined in any one of clauses 13 to 17, wherein loading the aerostructure comprises simulating a weight of aircraft fuel.
19. The method as defined in any one of clauses 13 to 18, wherein the configuration obtained during loading of the aerostructure corresponds to when the aircraft is completely assembled and on the ground.
20. The method as defined in any one of clauses 13 to 19, wherein the device is part of a navigation system of the aircraft.
21. The method as defined in any one of clauses 13 to 20, wherein the device comprises an inertial reference unit.
22. The method as defined in any one of clauses 13 to 20, wherein the device comprises an angle-of-attack indicating system.
23. The method as defined in any one of clauses 13 to 19, wherein the device comprises a pitot-static system.
24. The method as defined in clause 13, wherein the aerostructure comprises a wing of the aircraft and the other component comprises a fuselage of the aircraft.
25. The method as defined in clause 24, wherein the device comprises a flight control surface.
26. The method as defined in any one of clauses 13 to 19 and 24, wherein the device comprises a landing gear.
27. The method as defined in any one of clauses 13 to 19 and 24, wherein the device comprises a landing gear door.
28. The method as defined in any one of clauses 13 to 27, comprising:
   sensing a position of the aerostructure during the loading of the aerostructure; and
   adjusting the loading of the aerostructure based on the sensed position of the aerostructure.
29. The method as defined in any one of clauses 13 to 28, comprising simultaneously carrying out another assembly-related task while calibrating the device.
30. A method for loading a fuselage of an aircraft that is unassembled with another component of the aircraft to obtain a configuration of the fuselage corresponding to when the fuselage is assembled with the other component, the method comprising:
   loading the fuselage of the aircraft that is unassembled with the other component to simulate a weight of the other component and obtain a configuration of the fuselage corresponding to when the fuselage is assembled with the other component;
   sensing a position of the fuselage during the loading of the fuselage; and
   adjusting the loading of the fuselage based on the sensed position of the fuselage to maintain the configuration.
31. The method as defined in clause 30, wherein loading the fuselage comprises simulating a weight of an aircraft engine assembled with the fuselage.
32. The method as defined in any one of clauses 30 and 31, wherein loading the fuselage comprises simulating a weight of interior furnishings.
33. The method as defined in any one of clauses 30 to 32, wherein loading the fuselage comprises simulating a weight of one or more wings assembled with the fuselage.
34. The method as defined in any one of clauses 30 to 33, wherein loading the fuselage comprises simulating a weight of aircraft fuel.
35. The method as defined in any one of clauses 30 to 34, wherein the configuration obtained during loading of the fuselage corresponds to when the aircraft is completely assembled.
36. The method as defined in any one of clauses 30 to 35, comprising:
   comparing the sensed position with a desired position, and
   based on a difference between the sensed position and the desired position, adjusting the loading of the fuselage to keep or bring the sensed position within a desired tolerance of the desired position.
37. The method as defined in any one of clauses 30 to 36, comprising:
   detecting a disturbance affecting the configuration of the fuselage based on the sensed position; and
   adjusting the loading of the fuselage to compensate for the disturbance and maintain the configuration.
38. The method as defined in any one of clauses 30 to 37, comprising carrying out a cabin pressurization test during the loading of the fuselage.
39. A system for loading a fuselage of an aircraft during calibration of a device of a navigation system of the aircraft to replicate a configuration of the fuselage corresponding to when the fuselage is assembled with another component of the aircraft, the system comprising:
   an actuator for loading the fuselage unassembled with the other component;
   a sensor for sensing a position of the fuselage;
   a data processor configured to receive an input signal representative of the position sensed by the sensor and generate an output signal for controlling the actuator; and
   machine-readable memory coupled to the data processor, the machine-readable memory comprising: data representative of a stored position of the fuselage associated with a configuration corresponding to when the fuselage is assembled with the other component of the aircraft; and machine-readable instructions configured to cause the processor to:
      using the input signal and the data representative of the stored position, compare the sensed position with the stored position; and
      based on a difference between the sensed position and the stored position, generate the output signal for causing the actuator to load the fuselage to keep or bring the sensed position within a desired tolerance of the stored position.
40. The system as defined in clause 39, wherein the sensor comprises a laser position tracking system.
41. The system as defined in any one of clauses 39 and 40, wherein the sensor comprises a photogrammetry system.
42. The system as defined in any one of clauses 39 to 41, wherein the other component comprises a wing of the aircraft and the configuration with which the stored position is associated corresponds to when the fuselage is assembled with the wing.
43. The system as defined in any one of clauses 39 to 42, wherein the other component comprises interior furnishings and the configuration with which the stored position is associated corresponds to when the fuselage is assembled with the interior furnishings.
44. The system as defined in any one of clauses 39 to 43, wherein the other component comprises an aircraft engine and the configuration with which the stored position is associated corresponds to when the fuselage is assembled with the aircraft engine.
45. The system as defined in any one of clauses 39 to 44, wherein the other component comprises aircraft fuel and the configuration with which the stored position is associated corresponds to when the aircraft contains aircraft fuel.
46. The system as defined in any one of clauses 39 to 45, wherein the configuration with which the stored position is associated corresponds to when the aircraft is completely assembled.
47. The system as defined in any one of clauses 39 to 46, comprising a weight for at least partially simulating the other component being assembled with the fuselage.
48. The system as defined in any one of clauses 39 to 47, wherein:
   the position sensor is configured to sense a plurality of positions associated with different respective portions of the fuselage; and
   the machine-readable memory comprises data representative of stored positions corresponding to the different respective portions of the fuselage.
49. The system as defined in any one of clauses 39 to 48, comprising a plurality of actuators for loading the same or different respective portions of the fuselage.
50. The system as defined in any one of clauses 39 to 49, wherein the machine-readable instructions are configured to cause the processor to:
   detect a disturbance affecting the configuration of the fuselage based on the sensed position; and
   generate the output signal to compensate for the disturbance.
51. An assembly line comprising a plurality of stations for assembling an aircraft, wherein one of the stations comprises the system as defined in any one of clauses 39 to 50.

## Claims

1. A method for calibrating a device associated with an aerostructure of an aircraft when the aerostructure is unassembled with another component of the aircraft, the method comprising:
loading the aerostructure that is unassembled with the other component of the aircraft to obtain a configuration of the aerostructure corresponding to when the aerostructure is assembled with the other component of the aircraft; and
calibrating the device when the aerostructure is unassembled with the other aircraft component and being loaded to obtain the configuration.

2. The method as defined in claim 1, wherein the aerostructure comprises a fuselage of the aircraft.

3. The method as defined in claim 2, wherein the other component comprises a wing of the aircraft.

4. The method as defined in any one of claims 1 to 3, wherein loading the aerostructure comprises simulating a weight of interior furnishings of the aircraft.

5. The method as defined in any one of claims 1 to 4, wherein loading the aerostructure comprises simulating a weight of an aircraft engine.

6. The method as defined in any one of claims 1 to 5, wherein loading the aerostructure comprises simulating a weight of aircraft fuel.

7. The method as defined in any one of claims 1 to 6, wherein the configuration obtained during loading of the aerostructure corresponds to when the aircraft is completely assembled and on the ground.

8. The method as defined in any one of claims 1 to 7, wherein the device is part of a navigation system of the aircraft.

9. The method as defined in any one of claims 1 to 8, wherein the device comprises an inertial reference unit.

10. The method as defined in any one of claims 1 to 8, wherein the device comprises an angle-of-attack indicating system.

11. The method as defined in any one of claims 1 to 7, wherein the device comprises a pitot-static system.

12. The method as defined in claim 1, wherein the aerostructure comprises a wing of the aircraft and the other component comprises a fuselage of the aircraft.

13. The method as defined in claim 12, wherein the device comprises a flight control surface.

14. The method as defined in any one of claims 1 to 7 and 12, wherein the device comprises a landing gear.

15. The method as defined in any one of claims 1 to 7 and 12, wherein the device comprises a landing gear door.

16. The method as defined in any one of claims 1 to 15, comprising:
sensing a position of the aerostructure during the loading of the aerostructure; and
adjusting the loading of the aerostructure based on the sensed position of the aerostructure.
